# EUROPEAN PATENT APPLICATION

(11) **EP 4 707 026 A1**
(43) Date of publication of application: **11.03.2026**
(21) Application number: 25195752.8
(22) Date of filing: 13.08.2025
(51) Int. Cl.: B60K 35/81

(54) **VEHICLE FUNCTION INFORMATION PROVIDING SYSTEM AND VEHICLE FUNCTION INFORMATION PROVIDING METHOD**

(30) Priority: 03.09.2024 JP 2024151561
(71) Applicant: TOYOTA JIDOSHA KABUSHIKI KAISHA, Toyota-shi Aichi 471-8571 (JP)
(72) Inventor: WEIGH, Steven, Tokyo, 103-0022 (JP); SHIMIZU, Ryusuke, Tokyo, 103-0022 (JP)
(74) Representative: D Young & Co LLP

(57) **Abstract**

The provision of a vehicle function description display for a user is avoided in an inappropriate situation. A vehicle function information providing system for providing a vehicle function description display to a user who is in a vehicle comprises prohibiting the provision of the vehicle function description display when there is an obstacle approaching the vehicle among obstacles near the vehicle, and permitting the provision of the vehicle function description display when there is no obstacle approaching the vehicle among the obstacles near the vehicle.

## Description

### CROSS-REFERENCE TO RELATED APPLICATIONS

This application is based upon and claims the benefit of priority from Japanese Patent Application No. 2024-151561, filed on September 3, 2024, the entire contents of which are incorporated herein by reference.

### TECHNICAL FIELD

The present disclosure relates to a vehicle function information providing system and a vehicle function information providing method.

### BACKGROUND

Conventionally, Japanese Unexamined Patent Publication No. 2005-050273 is known as a technical document related to the provision of information about vehicle functions. As disclosed in this publication, an in-vehicle device operation assistance system for providing guidance from an in-vehicle device to a user downloads an online manual according to a user's usage history and provides guidance on a method for operating the in-vehicle device according to a driving state of a vehicle and the like. The operation method on which the guidance is provided by this system includes, for example, a position of an operation switch or a basic operation method for the operation switch. In addition, it is shown that the user is a driver and guidance on an operation method in which the driver is required to gaze at a target of operation guidance is provided when the vehicle is stopped.

### SUMMARY

In the above-described conventional system, the guidance method of the in-vehicle device changes with a driving state of the vehicle. However, even if the vehicle is stopped, there are cases where it is not appropriate to provide guidance to the user from the in-vehicle device according to an external situation of the vehicle. There is a problem because the conventional system does not fully take into account an influence of the external situation of the vehicle.

According to an aspect of the present disclosure, there is provided a vehicle function information providing system for providing a vehicle function description display to a user who is in a vehicle, the vehicle function information providing system comprising: prohibiting the provision of the vehicle function description display when there is an obstacle approaching the vehicle among obstacles near the vehicle; and permitting the provision of the vehicle function description display when there is no obstacle approaching the vehicle among the obstacles near the vehicle.

In the vehicle function information providing system according to the aspect of the present disclosure, because the provision of the vehicle function description display is prohibited when there is an approaching obstacle, it is possible to avoid the provision of the vehicle function description display for the user in an inappropriate situation on the basis of states of obstacles near the vehicle.

The vehicle function information providing system according to the aspect of the present disclosure may comprise suggesting to the user to start the vehicle function description display when there is an obstacle moving near the vehicle but there is no approaching obstacle among the obstacles near the vehicle.

The vehicle function information providing system according to the aspect of the present disclosure may comprise acquiring a past browsing history of the vehicle function description display for the user on the basis of a personal authentication result of the user; and preventing the vehicle function description display from being provided to the user in at least one of a case where the number of times the user has previously browsed the vehicle function description display is greater than or equal to a determination threshold value and a case where the user is browsing the vehicle function description display within a set period.

The vehicle function information providing system according to the aspect of the present disclosure may comprise prohibiting the provision of the vehicle function description display in at least one of a case where the vehicle is not stopped and a case where the vehicle is not in automated driving.

The vehicle function information providing system according to the aspect of the present disclosure may comprise automatically starting the provision of the vehicle function description display for the user in at least one of a case where all obstacles near the vehicle are stopped and a case where there is no obstacle near the vehicle.

The vehicle function information providing system according to the aspect of the present disclosure may comprise determining whether or not a preset browsing prohibition condition is satisfied on the basis of at least one of a driving state of the vehicle and a state of an obstacle near the vehicle; and prohibiting the provision of the vehicle function description display for the user when it is determined that the browsing prohibition condition is satisfied.

The vehicle function information providing system according to the aspect of the present disclosure may comprise determining that the browsing prohibition condition is satisfied in at least one of a case where the vehicle is in a reverse state and a case where there is a moving obstacle within a proximity determination distance from the vehicle.

According to another aspect of the present disclosure, there is provided a vehicle function information providing method for providing a vehicle function description display to a user who is in a vehicle, the vehicle function information providing method comprising: prohibiting, by a vehicle function information providing system, the provision of the vehicle function description display when there is an obstacle approaching the vehicle among obstacles near the vehicle; and permitting the provision of the vehicle function description display when there is no obstacle approaching the vehicle among the obstacles near the vehicle.

In the vehicle function information providing method of the vehicle function information providing system according to the other aspect of the present disclosure, because the provision of the vehicle function description display is prohibited when there is an approaching obstacle, it is possible to avoid the provision of the vehicle function description display for the user in an inappropriate situation on the basis of states of obstacles near the vehicle.

According to the aspects of the present disclosure, it is possible to avoid the provision of the vehicle function description display for the user in an inappropriate situation on the basis of states of obstacles near the vehicle.

### BRIEF DESCRIPTION OF THE DRAWINGS

Fig. 1 is a block diagram showing a vehicle function information providing system according to an embodiment.
Fig. 2 is an explanatory table of an example of start aspects of a vehicle function description display.
Fig. 3 is a flowchart showing an example of a personal browsing history acquisition process of the vehicle function information providing system.
Fig. 4 is a flowchart showing an example of an information providing process of the vehicle function information providing system.
Fig. 5 is a flowchart showing an example of an information providing process subsequent to the flowchart of Fig. 4.
Fig. 6 is a flowchart showing an example of an information provision prohibition process of the vehicle function information providing system.

### DETAILED DESCRIPTION

Embodiments of the present disclosure will now be described with reference to the drawings.

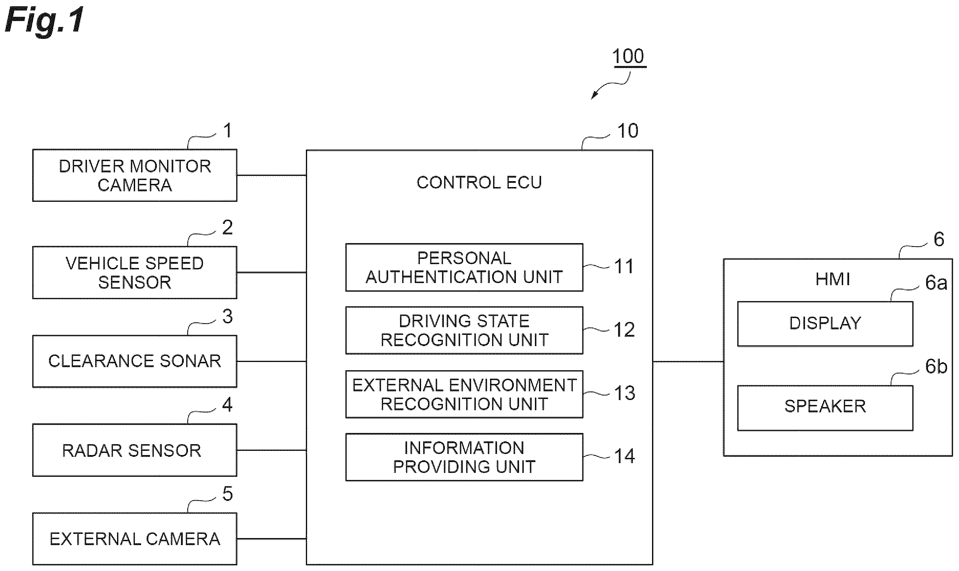

Fig. 1 is a block diagram showing a configuration of a vehicle function information providing system 100 according to an embodiment. The vehicle function information providing system 100 shown in Fig. 1 is a system that provides a vehicle function description display to a user who is in a vehicle at an appropriate timing.

The user is, for example, a driver of a vehicle. The user may include an occupant of the vehicle other than the driver. The vehicle may be a vehicle having an automated driving function or a vehicle that does not have an automated driving function. The automated driving function is, for example, a function that enables the execution of control of automated driving level 2 or higher certified by the Society of Automotive Engineers (SAE). Specifically, the automated driving function in the present embodiment may include a function of executing adaptive cruise control (ACC) and lane keeping assist (LKA). It is only necessary for the user to be in a situation in which he or she has enough time to browse the vehicle function description display. The automated driving function may be limited to a function that enables the execution of control of automated driving level 3 or higher.

The vehicle function is a function of the vehicle for providing convenience to the user. Vehicle functions may include the above-described automated driving function. The vehicle function may include a parking assistance function. The parking assistance function is a function that assists the user to park the vehicle appropriately. The parking assistance function is executed to recognize an external environment of the vehicle using multiple sensors and cameras, and guide the driver to park the vehicle in an appropriate position. The parking assistance function may be a function of automatically parking the vehicle. The vehicle functions may include a function of ascertaining a situation outside the vehicle (e.g., a panoramic view monitor).

The vehicle functions may include an advanced driver assistance systems (ADAS) function. The ADAS function may include at least one of ACC, LKA, collision mitigation brake (e.g., pre-crash safety), collision avoidance assistance, rear side warning function (e.g., blind spot monitor), night vision function (e.g., night view), sign recognition function (e.g., road sign assist), assistance for stopping the vehicle in the case of driver abnormality, driver abnormality response function, automated headlight adjustment assistance (e.g., adaptive front lighting), lane change assistance, deceleration and steering assistance for obstacles (e.g., proactive driving assist), preceding vehicle departure notification function (e.g., preceding vehicle departure alarm), and crossing vehicle notification function (e.g., front cross traffic alert).

The vehicle function information providing system 100 mainly includes a control electronic control unit (ECU) 10 mounted on the vehicle. The control ECU 10 is an electronic control unit having a central processing unit (CPU) and a storage unit. The storage unit includes a read only memory (ROM), a random-access memory (RAM), an electrically erasable programmable read-only memory (EEPROM), and the like. The control ECU 10 implements various functions by executing programs stored in the storage unit with the CPU. The control ECU 10 may include a plurality of electronic units.

A driver monitor camera 1, a vehicle speed sensor 2, a clearance sonar 3, a radar sensor 4, and an external camera 5 are connected to the control ECU 10. These sensors and cameras detect a surrounding environment of the vehicle and a state of the vehicle and transmit information thereabout to the control ECU 10.

The driver monitor camera 1 is a camera for capturing an image of the driver's face or head. The driver monitor camera 1, for example, is installed on a steering column cover and captures an image of the driver including the driver's face. The driver monitor camera 1 is a digital camera having an image sensor such as a CCD or CMOS image sensor (CIS). The driver monitor camera 1 transmits images of the driver captured at a predetermined frame rate to the control ECU 10. The driver monitor camera 1 may include a camera capable of capturing an image of an occupant other than the driver's seat.

The vehicle speed sensor 2 is a sensor that detects the speed of the vehicle. The vehicle speed sensor 2 transmits the detected vehicle speed information to the control ECU 10. The clearance sonar 3 is a sensor that detects obstacles near the vehicle using ultrasonic waves. The clearance sonar 3 accurately detects obstacles at a short distance and transmits obstacle information about the detected obstacles to the control ECU 10. In addition, the clearance sonar 3 is not essential.

The radar sensor 4 is a sensor that detects obstacles near the vehicle using radio waves or light, and includes a millimeter wave radar and a LiDAR. The radar sensor 4 transmits information about the detected obstacles to the control ECU 10.

The external camera 5 is a camera that captures an external environment of the vehicle. The external camera 5 includes a front camera that captures a view in front of the vehicle. The external camera 5 may also include a rear camera that captures a view behind the vehicle and a side camera that captures a view to the side of the vehicle. The external camera 5 transmits captured images related to the external environment of the vehicle to the control ECU 10.

The HMI 6 is an interface for inputting and outputting information between the vehicle function information providing system 100 and the user and includes a display 6a and a speaker 6b provided in a vehicle cabin. The HMI 6 performs at least one of image output from the display 6a and sound output from the speaker 6b in accordance with a control signal from the control ECU 10. The display 6a may be a center display provided on a dashboard of the vehicle or may be a head up display (HUD). The display 6a may have a touch panel function. The HMI 6 may have various types of buttons for the user to operate, and may have a voice recognition function.

Next, a functional configuration of the control ECU 10 will be described. As shown in Fig. 1, the control ECU 10 includes a personal authentication unit 11, a driving state recognition unit 12, an external environment recognition unit 13, and an information providing unit 14. In addition, some of the functions of the control ECU 10 may be executed by an external server capable of communicating with the vehicle.

The personal authentication unit 11 performs personal authentication for the user of the vehicle. For example, the personal authentication unit 11 performs the personal authentication for the user by comparing the image of the driver captured by the driver monitor camera 1 with registered face image data. The personal authentication unit 11 may perform personal authentication by fingerprint authentication, iris authentication, voice authentication, a dedicated smartphone app, passcode input, or other methods. The personal authentication unit 11 may perform personal authentication by combining a plurality of methods.

The personal authentication unit 11 acquires the user's past browsing history of the vehicle function description display on the basis of a personal authentication result for the user. The user's past browsing history of the vehicle function description display includes at least types of vehicle functions that the user has previously browsed and browsing timings. The types of vehicle functions include a parking assistance function, ACC, and the like. The browsing history may include a browsing count for each type of vehicle function. The browsing history may include a browsing state, such as whether the browsing was interrupted midway, how far the user browsed, or whether the user browsed to the end. The browsing history may include a browsing start state, such as whether the user has started browsing independently without a system suggestion, whether the user has started browsing after receiving a system suggestion, or whether browsing has been automatically started by the system.

The browsing history is stored in the storage unit of the control ECU 10 and other in-vehicle databases. The database of the browsing history may be provided in an external server, and the browsing record may be acquired by wireless communication.

The driving state recognition unit 12 recognizes the driving state of the vehicle based on detection results of various sensors of the vehicle. The driving state recognition unit 12 recognizes the vehicle speed as the driving state on the basis of the detection result of the vehicle speed sensor 2. The driving state recognition unit 12 determines whether or not the vehicle is stopped on the basis of a speed of the vehicle. The driving state recognition unit 12 may determine that the vehicle is stopped when the vehicle speed remains near 0 km/h for a certain period of time.

The driving state recognition unit 12 may recognize the driving state of the vehicle, such as a yaw rate or acceleration, using a yaw rate sensor, an acceleration sensor, or other sensors. The driving state recognition unit 12 may recognize a shift position of the vehicle on the basis of the detection result of a shift position sensor. For example, when the shift position is set to "reverse," the driving state recognition unit 12 recognizes that the vehicle is in a reverse state. The driving state recognition unit 12 may monitor an activation state of the vehicle's automated driving system and recognize whether or not the vehicle is in automated driving.

The external environment recognition unit 13 recognizes an external environment of the vehicle on the basis of information from the clearance sonar 3, the radar sensor 4, the external camera 5, and the like. The external environment of the vehicle includes a state of an obstacle outside the vehicle. The external environment recognition unit 13 recognizes the state of the obstacle outside the vehicle on the basis of information from the clearance sonar 3, the radar sensor 4, the external camera 5, and the like. The state of the obstacle includes the presence or absence of an obstacle, a position of the obstacle relative to the vehicle, and a movement speed and movement direction of the obstacle. The movement speed of the obstacle may be a movement speed relative to the vehicle. The movement direction of the obstacle may be a movement direction relative to the vehicle.

Obstacles include other vehicles and pedestrians. The other vehicles may include passenger cars, trucks, buses, motorcycles, bicycles, and personal mobility vehicles. The personal mobility vehicles include at least one of electric kick scooters, two-wheeled self-supporting electric mobility vehicles, electric unicycles, electric skateboards, electric roller skates, and electric wheelchairs. The obstacles may include animals such as dogs and deer. The obstacles may include structures such as guardrails and utility poles, other parked vehicles, and the like.

The external environment recognition unit 13 calculates a distance between the vehicle and the obstacle from the position of the obstacle relative to the vehicle. The external environment recognition unit 13 recognizes obstacles near the vehicle on the basis of the distance between the vehicle and the obstacle. An obstacle near the vehicle is, for example, an obstacle detected by a sensor of the vehicle and located within a certain distance from the vehicle. The obstacles near the vehicle may be all obstacles detected by the sensor of the vehicle. The obstacles near the vehicle may be obstacles located within a preset range near the vehicle.

The external environment recognition unit 13 determines whether all obstacles near the vehicle are stopped or whether there are no obstacles near the vehicle. Moreover, the external environment recognition unit 13 also determines whether or not there is an obstacle approaching the vehicle on the basis of the position and movement direction of the obstacle near the vehicle. The approaching obstacle is an obstacle moving toward the vehicle. When the vehicle is traveling, the approaching obstacle may include an obstacle approaching in a travel direction of the vehicle. For example, this applies to a case where another vehicle is approaching the vehicle, a pedestrian is crossing in the travel direction of the vehicle, or the like.

The external environment recognition unit 13 may determine whether or not there is a distant obstacle moving away from the vehicle on the basis of the positions and movement directions of obstacles located near the vehicle. The distant obstacle is an obstacle moving in a direction away from the vehicle.

The information providing unit 14 provides a vehicle function description display for the user by transmitting a control signal to the HMI 6. The vehicle function description display is provided, for example, as a video with sound. The vehicle function description display may be provided in the form of a short video that prioritizes time efficiency and a full video (a full-length video) that prioritizes content enrichment. The vehicle function description display may be provided using still images that are changed in a sliding manner. The vehicle function description display may be provided mainly by sound. In this case, an icon or text indicating that the vehicle function is being described by sound may be displayed on a part of a display 6a.

The information providing unit 14 provides the vehicle function description display when an operation for starting the vehicle function description display is performed by the user. The start operation is, for example, an operation in which the user selects the start of the vehicle function description display by operating a touch panel or a button. The information providing unit 14 suggests the start of the vehicle function description display to the user when a predetermined condition is satisfied. The information providing unit 14 suggests the start of the vehicle function description display by displaying an image on the display 6a and/or outputting sound from a speaker 6b. The information providing unit 14 suggests the start of the vehicle function description display by, for example, displaying a window on the display 6a with text indicating that the vehicle function description display will start and an icon for prompting the user to touch. The suggestion method is not particularly limited. Moreover, the information providing unit 14 automatically starts the vehicle function description display when a predetermined condition is satisfied. The various conditions will be described in detail below.

The information providing unit 14 determines whether or not a vehicle function description display for the user is necessary on the basis of the user's past browsing history of the vehicle function description display recognized by the personal authentication unit 11. Thereby, it is possible to provide appropriate information according to the user's level of understanding and usage situation.

Specifically, the information providing unit 14 determines whether or not the number of times the user has previously browsed the vehicle function description display is less than a determination threshold value. Hereinafter, the number of times the user has previously browsed the vehicle function description display is referred to as a browsing count. When the browsing count is not less than the determination threshold value (when the browsing count is greater than or equal to the determination threshold value), the information providing unit 14 determines that there is no need to display the vehicle function description.

The determination threshold value may be, for example, the number of times when the user is deemed to have sufficiently understood the description of the vehicle function. The determination threshold value may be one time, two times, three or more times, or five or more times. The determination threshold value may be set to a different value for each type of vehicle function. The determination threshold value may be set to a different value for each description display aspect, such as a short video or a full video. The information providing unit 14 may determine that browsing of the full video is necessary when a full-video browsing count is less than the determination threshold value even if a short-video browsing count of the user is greater than or equal to the determination threshold value.

In addition, the information providing unit 14 may change the determination threshold value on the basis of the usage situation of the vehicle function. The information providing unit 14 may set the determination threshold value for the vehicle function to a smaller value as the user uses the vehicle function, such as the parking assistance function, more frequently.

The information providing unit 14 may determine whether or not the user has browsed the vehicle function description display within a set period. The set period may be three months, six months, or one year. The set period may be set arbitrarily. When the user has browsed the vehicle function description display within the set period, the information providing unit 14 may determine that the vehicle function description display is not necessary. This determination is performed for each vehicle function.

In addition, the information providing unit 14 may change the set period on the basis of the usage situation of the vehicle function. The information providing unit 14 may set a longer set period for the vehicle function as the user uses the vehicle function, such as the parking assistance function, more frequently.

When it is determined that the vehicle function description display is necessary, the information providing unit 14 controls the provision of the vehicle function description display on the basis of the driving state of the vehicle recognized by the driving state recognition unit 12. Specifically, when the driving state recognition unit 12 determines that the vehicle is not stopped or is not in automated driving (when the vehicle is traveling in manual driving), the information providing unit 14 prohibits the provision of the vehicle function description display. When it is determined that the vehicle is stopped or in automated driving, the information providing unit 14 permits the provision of the vehicle function description display. In addition, when the provision of the description display is prohibited due to another requirement, the prohibition takes precedence over the permission. The same is also true hereinafter.

Moreover, when it is determined that the vehicle function description display is necessary, the information providing unit 14 controls the provision of the vehicle function description display on the basis of the state of the obstacle near the vehicle recognized by the external environment recognition unit 13. When an approaching obstacle is located near the vehicle, the information providing unit 14 prohibits the provision of the vehicle function description display. In a situation in which an obstacle is approaching, it is desirable for the user to pay attention to a surrounding situation without being distracted by the vehicle function description display. While the provision of the vehicle function description display is prohibited, even if the user performs an operation for starting the vehicle function description display, the description display may not be provided. In addition, even during the prohibition period, the description display may be provided after an alert is displayed, if the user so wishes. When there is no approaching obstacle near the vehicle, the information providing unit 14 permits the provision of the vehicle function description display.

The information providing unit 14 temporarily prohibits the vehicle function description display when another vehicle or a pedestrian is approaching, even if the user is browsing the vehicle function description display, so that the user can pay attention to the surroundings. When the external environment recognition unit 13 determines that there is no approaching obstacle near the vehicle, the information providing unit 14 permits the provision of the vehicle function description display.

If the provision of the vehicle function description display is not prohibited, when an obstacle is moving near the vehicle but there is no approaching obstacle among the obstacles near the vehicle, the information providing unit 14 may make a suggestion to the user to start the vehicle function description display. The information providing unit 14 controls the HMI 6 so that the start of the vehicle function description display is suggested by displaying an image on the display 6a and/or outputting sound from the speaker 6b. In addition, the information providing unit 14 may suggest to the user to start the vehicle function description display when there is no approaching obstacle among the obstacles near the vehicle and there is a distant obstacle moving away from the vehicle.

The suggestion to start the vehicle function description display may be made at a timing based on a situation of the user recognized from the driver image of the driver monitor camera 1. The information providing unit 14 may withhold the suggestion to start the vehicle function description display when it is recognized that the user is paying attention to operating a vehicle system such as a navigation system. The information providing unit 14 may also withhold the suggestion to start the vehicle function description display when the user is concentrating on operating a smartphone or watching television or the like on the display 6a.

For example, when the vehicle is parked, there are no approaching obstacles such as other vehicles or pedestrians in a nearby area, and nearby obstacles are moving away from the vehicle, the information providing unit 14 suggests to the user to start the vehicle function description display. In response to this suggestion, the user can start the vehicle function description display.

If the provision of the vehicle function description display is not prohibited, the information providing unit 14 executes the automatic start of the vehicle function description display when all obstacles near the vehicle are stopped or when there are no obstacles near the vehicle. The automatic start of the vehicle function description display indicates that the provision of the vehicle function description display is automatically started by the system determination without any operation from the user. The user can also turn off the automatic start function in advance. The information providing unit 14, for example, controls the HMI 6 so that a video as the vehicle function description display flows to the display 6a and a description is output using sound from the speaker 6b. The information providing unit 14 may perform the automatic start only when the vehicle is stopped.

The information providing unit 14 may determine whether or not a preset browsing prohibition condition is satisfied on the basis of the driving state of the vehicle or a result of detecting an obstacle near the vehicle. When the information providing unit 14 determines that the browsing prohibition condition is satisfied, the information providing unit 14 prohibits the provision of the vehicle function description display for the user.

For example, when the vehicle is in a reverse state, the information providing unit 14 determines that the browsing prohibition condition is satisfied. In a situation in which the vehicle is in a reverse state, it is desirable for the user to pay attention to the surroundings of the vehicle.

The information providing unit 14 may determine that the browsing prohibition condition is satisfied when there is a moving obstacle within the proximity determination distance. The information providing unit 14 may determine whether or not there is a moving obstacle within the proximity determination distance on the basis of a detection result of the clearance sonar 3. The proximity determination distance may be 1 m, 1.5 m, or 2 m. The proximity determination distance may be set arbitrarily. In addition, the information providing unit 14 may determine that the browsing prohibition condition is satisfied when there is a stationary pedestrian or bicycle within the proximity determination distance.

The information providing unit 14 may determine that the browsing prohibition condition is satisfied during the execution of the parking assistance function. The information providing unit 14 may determine that the browsing prohibition condition is satisfied when the vehicle is in automated driving and performs complicated driving such as turning right or left at an intersection or changing lanes. The information providing unit 14 may determine that the browsing prohibition condition is satisfied in a situation in which the stopped state ends in a short time, such as when the vehicle is stopped while waiting for a traffic light or waiting for an oncoming vehicle to pass when turning right at an intersection. The information providing unit 14 may determine that the browsing prohibition condition is satisfied when a transmission is detected from a vehicle in front of a stopped vehicle or a vehicle in front of a preceding vehicle (another vehicle in front of the preceding vehicle). A situation of the vehicle and a situation of the preceding vehicle or the like may be detected by image recognition using an image captured by the external camera 5 or may be detected from a global navigation satellite system (GNSS) reception unit and map information.

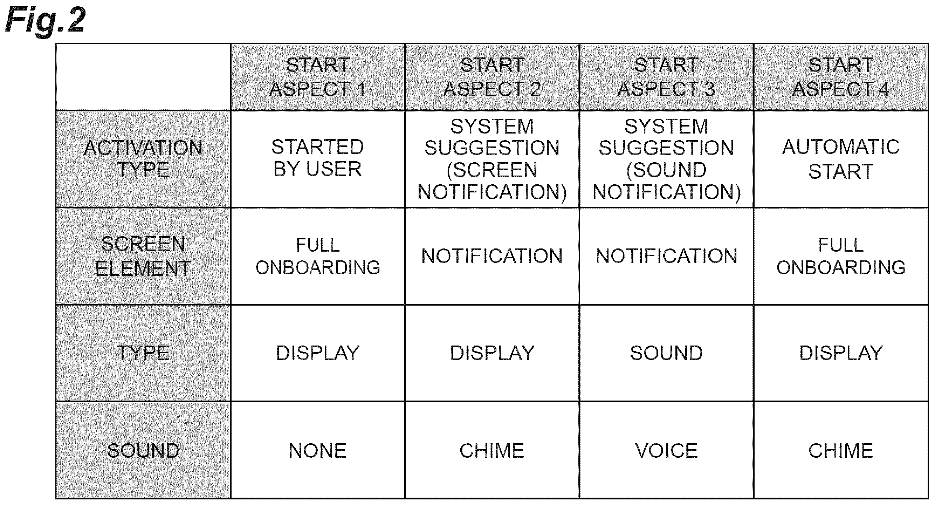

Here, Fig. 2 is an explanatory table of an example of start aspects of the vehicle function description display. Fig. 2 shows combinations of different activation types, screen elements, types, and sounds for start aspects 1 to 4. The screen elements, types, and sounds in start aspects 1 to 4 are elements at the time of introduction of the start of the vehicle function description display. The vehicle function description display itself is provided in different aspects, such as videos with sound.

Start aspect 1 shown in Fig. 2 shows a case where the activation type is "started by user." The user can execute an operation for starting the vehicle function description display, for example, when the vehicle system is activated and the provision of the vehicle function description display is not prohibited. "Full onboarding" is displayed as the screen element and this indicates that a detailed description is displayed across the entire screen. The type is "display" and visual information is provided. The sound is "none" and assistance using sound is not provided. In addition, this is just an example and sound may be output.

Start aspect 2 shows a case where the activation type is "system suggestion (screen notification)." Start aspect 2 is an aspect in which the information providing unit 14 suggests to the user to start the vehicle function description display. This indicates that the system automatically provides a notification on the screen and prompts the user to display the description. The screen element is "notification" and concise information is displayed. The type is "display" and visual information is provided through images. The sound is "chime" and a notification sound is produced to alert the user.

Start aspect 3 shows a case where the activation type is "system suggestion (sound notification)." Start aspect 3 is an aspect in which the information providing unit 14 suggests to the user to start the vehicle function description display. This indicates that the system automatically provides a sound notification to the user and prompts the user to display the description. The screen element is "notification" and concise information is displayed. The type is "sound" and information is provided using sound. Thereby, the user can receive a description using sound in addition to visual information. The sound is "voice" and a detailed description is provided using sound. The vehicle function description display itself may be performed by full onboarding or sound output.

Start aspect 4 shows a case where the activation type is "automatic start." Start aspect 4 is an aspect in which the information providing unit 14 automatically starts the vehicle function description display. The screen element is "full onboarding" and a detailed description is displayed across the entire screen. The type is "display" and visual information is provided. The sound is "chime" and a notification sound is produced to alert the user to the automatic start.

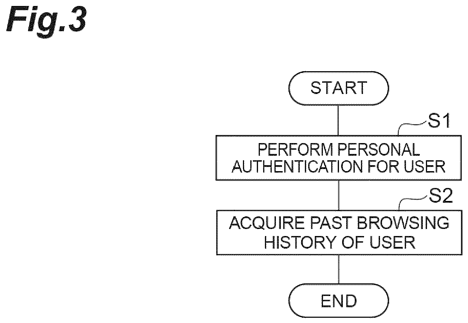

Next, a process related to the vehicle function information providing method of the vehicle function information providing system 100 according to the present embodiment will be described with reference to the drawings. Fig. 3 is a flowchart showing an example of a personal browsing history acquisition process of the vehicle function information providing system 100.

As shown in Fig. 3, in step S1, the control ECU 10 of the vehicle function information providing system 100 performs personal authentication for the user with the personal authentication unit 11. The personal authentication unit 11 executes the personal authentication for the user using, for example, an image of the driver captured by the driver monitor camera 1.

Subsequently, in step S2, the control ECU 10 acquires the user's past browsing history of the vehicle function description displays with the personal authentication unit 11. The browsing history includes information such as how many times the user has browsed the vehicle function description displays in the past. The personal authentication unit 11 acquires the browsing history linked to the user identified by the personal authentication. The personal authentication unit 11 acquires the browsing history for each vehicle function.

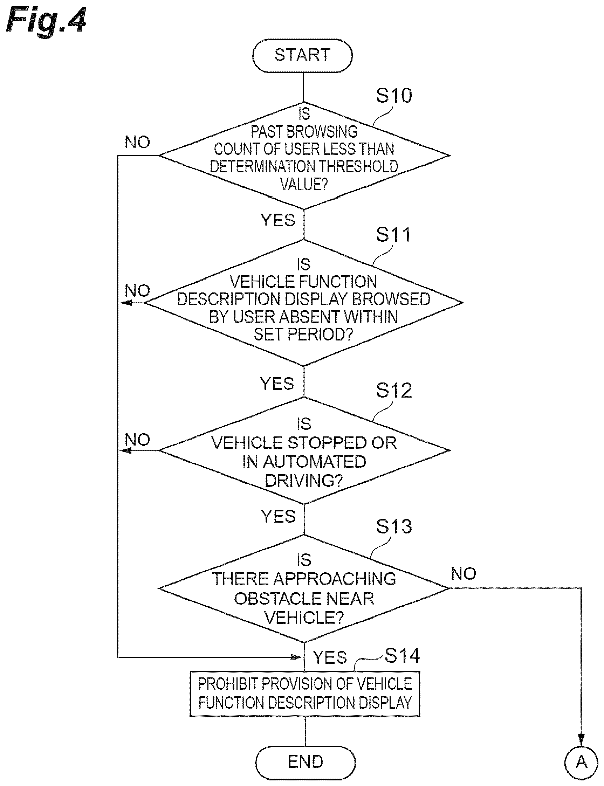

Fig. 4 is a flowchart showing an example of an information providing process of the vehicle function information providing system 100. The determination of the information providing process may be performed for each vehicle function. Priorities may be set in advance for the vehicle function description displays. The vehicle function information providing system 100, for example, performs the information providing process related to the vehicle function description displays in order of priority.

As shown in Fig. 4, in step S10, the control ECU 10 determines whether or not a past browsing count of the user is less than a determination threshold value with the information providing unit 14. This is to ascertain how many times the user has browsed the vehicle function description displays in the past and to determine whether or not the number of times is less than the determination threshold value that has been set. When the past browsing count of the user is less than the determination threshold value, the control ECU 10 proceeds to step S11. When the past browsing count of the user is not less than the determination threshold value, the control ECU 10 proceeds to step S14.

In S11, the control ECU 10 determines whether or not the user has browsed the vehicle function description display within a set period with the information providing unit 14. This is to determine the need to browse the description display on the basis of whether or not the user has browsed the description display within the set period going back from a current timing. When the user has not browsed the vehicle function description display within the set period, the control ECU 10 proceeds to step S12. When the user has browsed the vehicle function description display within the set period, the control ECU 10 proceeds to step S14.

In step S12, the control ECU 10 determines whether the vehicle is stopped, in automated driving, or in manual driving with the driving state recognition unit 12. When the vehicle is stopped or in automated driving, the control ECU 10 proceeds to step S13. When the vehicle is in manual driving (not stopped or not in automated driving), the control ECU 10 proceeds to step S14.

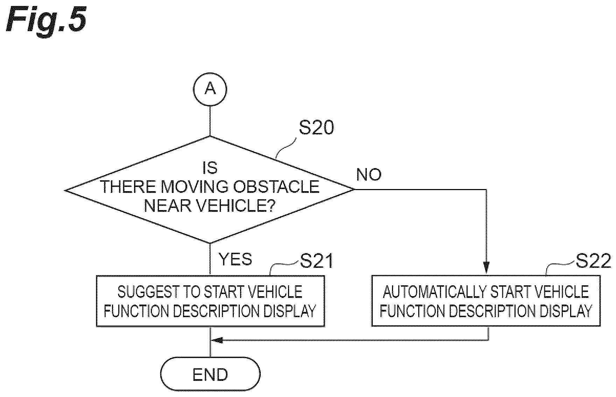

In step S13, the control ECU 10 determines whether or not there is an approaching obstacle near the vehicle with the external environment recognition unit 13. When there is an approaching obstacle near the vehicle, the control ECU 10 proceeds to step S14. When there is no approaching obstacle near the vehicle, the control ECU 10 proceeds to the flowchart of Fig. 5.

In step S14, the control ECU 10 prohibits the provision of a vehicle function description display with the information providing unit 14. The information providing unit 14 does not provide a vehicle function description display even if the user performs a start operation. In the case of NO in steps S10 and S11, a description display may be simply omitted without having to perform the prohibition process by proceeding to step S14.

Fig. 5 is a flowchart showing an example of the information provision process subsequent to the flowchart of Fig. 4. As shown in Fig. 5, the control ECU 10 determines whether or not there is a moving obstacle near the vehicle with the external environment recognition unit 13 in step S20. When there is a moving obstacle near the vehicle, the control ECU 10 proceeds to step S21. When there is no moving obstacle near the vehicle, the control ECU 10 proceeds to step S22. A situation in which the process proceeds to step S22 corresponds to a situation in which all obstacles near the vehicle are stopped or there is no obstacle near the vehicle.

In step S21, the control ECU 10 suggests to the user to start the vehicle function description display with the information providing unit 14. The information providing unit 14 suggests to start the vehicle function description display by controlling the HMI 6. Subsequently, the control ECU 10 ends the current information provision process.

In step S22, the control ECU 10 automatically starts the vehicle function description display for the user with the information providing unit 14. The information providing unit 14 automatically starts the vehicle function description display by controlling the HMI 6. The vehicle function description display is provided as, for example, a full video. Subsequently, the control ECU 10 ends the current information providing process.

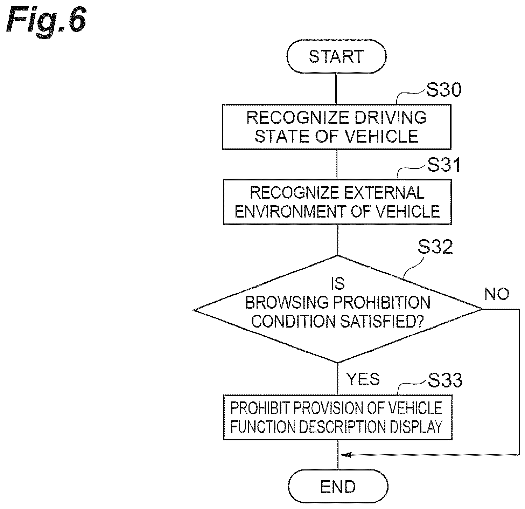

Fig. 6 is a flowchart showing an example of the information provision prohibition process of the vehicle function information providing system 100. The flowchart shown in Fig. 6 may be executed independently of Figs. 4 and 5. When the provision of a vehicle description display is prohibited by the information provision prohibition process of Fig. 6, the suggestion to start the description display in Fig. 4 and the automatic start of the description display in Fig. 5 are also prohibited. In addition, the vehicle function information providing system 100 does not necessarily need to perform the information provision prohibition process of Fig. 6.

As shown in Fig. 6, in step S30, the control ECU 10 recognizes a driving state of the vehicle with the driving state recognition unit 12. The driving state of the vehicle includes information about a reverse state of the vehicle. The driving state of the vehicle may include shift position information.

Subsequently, in step S32, the control ECU 10 recognizes the external environment of the vehicle with the external environment recognition unit 13. The external environment of the vehicle includes states of obstacles near the vehicle.

Subsequently, the control ECU 10 determines whether or not the browsing prohibition condition is satisfied with the information providing unit 14. The information providing unit 14, for example, determines that the browsing prohibition condition is satisfied when the vehicle is in the reverse state. The information providing unit 14 may determine that the browsing prohibition condition is satisfied when there is a moving obstacle within a proximity determination distance. When the control ECU 10 determines that the browsing prohibition condition is satisfied, the process proceeds to step S33. When it is determined that the browsing prohibition condition is not satisfied, the control ECU 10 ends the current information provision prohibition process.

According to the vehicle function information providing system 100 and its vehicle function information providing method according to the above-described present embodiment, the provision of a vehicle function description display is prohibited when there is an approaching obstacle, thereby avoiding the provision of a vehicle function description display for the user in inappropriate situations on the basis of the states of obstacles near the vehicle.

Moreover, the vehicle function information providing system 100 can provide a vehicle function description display at an appropriate timing on the basis of a user's past browsing history, a vehicle state, and states of surrounding obstacles. Thereby, the user can easily understand how to use the vehicle function and improve a vehicle function utilization rate. Moreover, by suppressing the description display at unnecessary timings, it is possible to reduce the inconvenience to the user.

According to the vehicle function information providing system 100, when there is a moving obstacle near a vehicle but there is no approaching obstacle, it is possible to provide an appropriate timing for a user to receive a description of a vehicle function by suggesting to start a vehicle function description display. Thereby, the user can easily understand how to use the vehicle function and improve a vehicle function utilization rate. Moreover, it is possible to reduce the inconvenience to the user by suppressing the description display at unnecessary timings.

According to the vehicle function information providing system 100, because a vehicle function description display can be automatically started in an appropriate situation in which a user does not need to concentrate on an operation of a vehicle, the user can learn how to use the vehicle function at an appropriate timing. Moreover, because the description display is automatically started even if the user does not perform any operation, the convenience is improved and the inconvenience to the user can be reduced.

According to the vehicle function information providing system 100, it is possible to prevent the description display from being provided in a situation in which a user should concentrate on driving by prohibiting the provision of a vehicle function description display when a vehicle is not stopped or not in automated driving. Moreover, according to the vehicle function information providing system 100, when all obstacles near the vehicle are stopped or when there is no obstacle near the vehicle, the vehicle function description display for the user is automatically started, such that the user can receive the vehicle function description at an appropriate timing. Thereby, the user can understand how to use the vehicle function and the vehicle function utilization rate can be improved.

According to the vehicle function information providing system 100, when it is determined that a browsing prohibition condition is satisfied on the basis of a driving state of a vehicle or a state of an obstacle near the vehicle, the provision of a vehicle function description display is prohibited, such that it is possible to avoid the inconvenience to a user because it is possible to suppress the suggestion or automatic start of the description display in a situation in which a driving state or an external environment is inappropriate. Specifically, according to the vehicle function information providing system 100, when the vehicle is in a reverse state or when there is a moving obstacle within a proximity determination distance of the vehicle, it is possible to suppress the suggestion or automatic start of the description display in a situation in which the user should pay attention to surroundings by determining that the browsing prohibition condition is satisfied and prohibiting the provision of the vehicle function description display.

Although the embodiment of the present disclosure has been described above, the present disclosure is not limited to the above-described embodiment. The present disclosure can be embodied in various forms including the above-described embodiment and various modifications and improvements based on the knowledge of those skilled in the art.

The vehicle function information providing system 100 does not necessarily need to perform personal authentication for the user. The vehicle function information providing system 100 does not necessarily need to determine whether or not the vehicle function description display is required on the basis of the user's past browsing history of the vehicle function description display. In this case, the driver monitor camera 1 is not required.

The vehicle function information providing system 100 may provide a vehicle function description display when the user performs a start operation regardless of the driving state of the vehicle. The vehicle function information providing system 100 may not provide a vehicle function description display while the vehicle is in automated driving. When the vehicle is in automated driving, the vehicle function information providing system 100 may provide a vehicle function description display only in a travel plan in which the vehicle travels on a straight road for a certain period of time or more.

The information providing unit 14 does not necessarily have to suggest to the user to start the vehicle function description display. Likewise, the information providing unit 14 does not necessarily have to automatically start the vehicle function description display for the user. The information providing unit 14 does not necessarily have to determine a browsing prohibition condition.

## Claims

1. A vehicle function information providing system (10) for providing a vehicle function description display (6a) to a user who is in a vehicle, the vehicle function information providing system (10) comprising:
prohibiting the provision of the vehicle function description display (6a) when there is an obstacle approaching the vehicle among obstacles near the vehicle; and
permitting the provision of the vehicle function description display (6a) when there is no approaching obstacle among the obstacles near the vehicle.

2. The vehicle function information providing system (10) according to claim 1, comprising suggesting to the user to start the vehicle function description display (6a) when there is an obstacle moving near the vehicle but there is no approaching obstacle among the obstacles near the vehicle.

3. The vehicle function information providing system (10) according to claim 1 or 2, comprising:
acquiring a past browsing history of the vehicle function description display (6a) for the user on the basis of a personal authentication result of the user by a personal authentication unit (11); and
preventing the vehicle function description display (6a) from being provided to the user in at least one of a case where the number of times the user has previously browsed the vehicle function description display (6a) is greater than or equal to a determination threshold value and a case where the user is browsing the vehicle function description display (6a) within a set period.

4. The vehicle function information providing system (10) according to any one of claims 1 to 3, comprising prohibiting the provision of the vehicle function description display (6a) in at least one of a case where the vehicle is not stopped and a case where the vehicle is not in automated driving.

5. The vehicle function information providing system (10) according to any one of claims 1 to 4, comprising automatically starting the provision of the vehicle function description display (6a) for the user in at least one of a case where all obstacles near the vehicle are stopped and a case where there is no obstacle near the vehicle.

6. The vehicle function information providing system (10) according to claim 1, comprising:
determining whether or not a preset browsing prohibition condition is satisfied on the basis of at least one of a driving state of the vehicle recognized by a driving state recognition unit (12) and a state of an obstacle near the vehicle recognized by an external environment recognition unit (13); and
prohibiting the provision of the vehicle function description display (6a) for the user when it is determined that the browsing prohibition condition is satisfied.

7. The vehicle function information providing system (10) according to claim 6, comprising determining that the browsing prohibition condition is satisfied in at least one of a case where the vehicle is in a reverse state and a case where there is a moving obstacle within a proximity determination distance from the vehicle.

8. A vehicle function information providing method for providing a vehicle function description display (6a) to a user who is in a vehicle, the vehicle function information providing method comprising:
prohibiting, by a vehicle function information providing system (10),
the provision of the vehicle function description display (6a) when there is an obstacle approaching the vehicle among obstacles near the vehicle; and
permitting the provision of the vehicle function description display (6a) when there is no approaching obstacle among the obstacles near the vehicle.
